(19) Europäisches Patentamt
European Patent Office
Office européen des brevets

(11) Publication number: **0 415 957 B1**

(12) **EUROPEAN PATENT SPECIFICATION**

(45) Date of publication of patent specification: **06.10.93**

(51) Int. Cl.$^5$: **H01M 6/34**

(21) Application number: **89905217.9**

(22) Date of filing: **28.04.89**

(86) International application number:
**PCT/NO89/00040**

(87) International publication number:
**WO 89/11165 (16.11.89 89/27)**

(54) **SALT WATER CELL.**

(30) Priority: **02.05.88 NO 881914**

(43) Date of publication of application:
**13.03.91 Bulletin 91/11**

(45) Publication of the grant of the patent:
**06.10.93 Bulletin 93/40**

(84) Designated Contracting States:
**BE DE FR GB IT NL SE**

(56) References cited:
**DE-A- 2 045 350**
**US-A- 3 401 063**
**US-A- 3 462 309**

**S. Trasatti: Electrodes of Conductive Metallic Oxides, part 1, Elsevier Sc. Publ. Comp. 1980, p. 240, 241**

(73) Proprietor: **DEN NORSKE STATS OLJESELSKAP A.S.**
**Postboks 300**
**N-4001 Stavanger(NO)**

Proprietor: **ALCATEL STK A/S**
**Box 60 Okern**
**N-0508 Oslo 5(NO)**

(72) Inventor: **HASVOLD, Öistein**
**Harasveien 1b**
**N-0283 Oslo 2(NO)**

(74) Representative: **Larsson, Sten**
**Flygt AB**
**Box 1309**
**S-171 25 Solna (SE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to primary galvanic cells (batteries) for use with salt water electrolytes, such as sea water. The present invention is a substantial improvement compared to prior art devices, as will be explained in the following.

One prior art device is described in US Patent 3.401.063. Here a sea water battery, consisting of an annular basket, containing metal wool, serving as the cathode of the cell, and a cylindrical metal anode, positioned in the central cavity, is described, having as its main feature the ability to generate electrical energy for time length of several years. Another important feature of this electrochemical cell is the ability to generate the electrical energy economically, both in terms of cost per kilowatthours and in watthours per kilograms. With magnesium as anode material and "steel wool" as cathode material, it produces long-term output voltages in the 0.35 to 0.7 V bracket.

The main limitations with respect to output voltage of the prior art cell described in the US Patent 3.401.063 is the corrosion of the cathode material. In addition to limiting the output voltage, corrosion on the "steel wool" may lead to disintegration of the cathode material during the life time of the cell or when stored in humid air.

In order to avoid corrosion on the cathode material, the cell cathode must be polarized continuously, i. e. the cell must deliver a certain minimum output current to cathodically protect the steel from corrosion, irrespective of the power demand from the user. This mode of operation increases the probability of premature degradation of the cell due to calcareous deposition on the cathode material, and decreases the practical energy output of the cell.

By carefully selecting the quality of the cathode material it is possible to avoid the main limitations of the sea water battery described above. These limitations can be omitted by using stainless steel cathodes, as mentioned in Russian Patent no 559307. This improved prior art device is not susceptible to corrosion neither in storage condition nor in operation. In said Russian Patent the output cell voltage is approximately 0.9 V.

However by carefully selecting the quality of the stainless steel cathode material and by optimising cell construction this improved prior art device should be potentially able to deliver output voltages up to ca 1.8 V. This would probably improve the energy density of the cell by a factor of between two and three.

One example of a stainless steel quality that fulfills the requirements, i. e. a stainless steel quality that is electrochemically passive with respect to anodic corrosion or has a very low level of corrosion during operation of the sea water battery, is a quality that is normally denoted AISI 316 (TM) by the American Iron and Steel Institute. However any other stainless steel quality, with the term stainless steel defined as ferrous material that contain more than 10 wt% chromium and at least 50 wt% iron, can, in principle, give improvements compared to the device described in the US Patent 3.401.063.

These improved prior art devices, however, when submerged in natural sea water, show an inferior performance during an initial period after exposure to the sea water. After this initial period, the device shows an improvement in performance which is due to the formation of a biologic film on the surface of the stainless steel cathode, a film which is catalytically active with respect to reduction of oxygen. The duration of this initial period will typically be in the order of one week to one month, depending on several factors, the most important being cathode current density and water flow velocity. In this initial period the galvanic cell will have inferior behaviour with respect to loadability and cell voltage compared to the same cell after the formation of the biologic active film.

The cell voltage in this initial period is very dependant on the current density on the cathode. At very low cathode loads, for instance 3 mA per $m^2$ cathode area, the cell voltage is in the order of 1.2 V, increasing to approximately 1.7 V after the initial period. At moderate loads of 50 $mA/m^2$ the cell voltage is in the order of 0.7 V during the initial period, but very much dependant on water flow velocity, while the cell voltage after one month exposure is 1.4 to 1.65 V depending on cell design and water flow velocity. At higher loads the initial cell voltage is even lower than 0.7 V. At the same time the duration of the initial period increases with increasing load, and if the load is too high, the cell will not reach this higher level of performance.

The inferior performance in the initial period of the above specified improved prior art devices, when used in natural sea water, may have as a consequence that the device cannot give sufficient energy to the equipment which it is supposed to power in this period. Another consequence may be that for uses with duration which is shorter than this initial period, the device must be increased in weight and volume to compensate for the inferior performance to such an extent that it is not practical to use due to the weight, volume or cost constrains of the system.

When used in ordinary salt water, meaning water containing sodium chloride or potassium chloride with the amount of other constituents not defined, or in artificial sea water, for instance according to DIN 50010, the formation of an catalytic active biofilm will not occur. This means that with the use of this type of electrolyte the prior art galvanic cell will have a poor performance even after exposure to the electrolyte for a time longer than the above mentioned initial period.

"Electrodes of Conductive Metallic Oxides" (1980) by S. Trasatti, describes how oxygen can undergo direct or indirect reduction to water on spinel type oxides or simple oxides respectively and it also teaches that cobaltite spinel catalysts may be used on carbon electrodes in batteries.

However, there is no teaching that any catalyst, other than the naturally appearing bio film, is necessary and a stainless steel cathode used in sea water or that a catalyst is chemically and physically stable when applied to a stainless steel cathode of a sea water battery.

The present invention has as its main object, as compared to the prior art devices described above, to provide a device having the ability to deliver nominal power from the time of exposure in nearly any kind of salt water. The object is also to provide a substantial improvement in performance of galvanic cells having stainless steel cathodes during the initial period of operation.

Another object of the invention is to enable the galvanic cell to be used in ordinary salt water, or in artificial sea water, and to improve the performance of the cell to such an extent in this environment that it is comparable to the same cell used in natural sea water after the initial period.

Another object of the invention, when used with natural sea water, is to improve the reliability of the galvanic cell, both in the initial period and afterwards. As mentioned above the reason for improvement after the initial period is the formation of a biofilm on the stainless steel surface. This film contain certain living organisms, the presence of which results in the ability to catalyze the reduction of oxygen in sea water. These organisms are susceptible to destruction if the immediate environment is changed, for instance by a sudden change in load from zero to a high cathode current density, or if toxic material is brought in contact with the cell. The destruction of these organisms results in temporary reduced catalytic activity of the cathode. The object of the present invention is to a large extent to reduce the dependance of these living organisms, thereby increasing the reliability of the cell.

Still another object of the present invention is to enable the same galvanic cell to be used several times, and each time of short or long duration. Between operations the cell should be capable of being removed from sea water and stored for a non-specified length of time. When submerged in sea water after a temporary storage, the cell should immediately regain its mode of operation.

The main features of the invention are defined in the accompanying claims.

The above mentioned objects of the present invention are met by applying a catalyst to the surface of the stainless steel cathode substrate. This catalyst have the features which are described below.

Firstly, the catalysts, which are the basis of this invention, have the ability to stimulate the reduction of oxygen that is dissolved in salt water. This stimulation of oxygen reduction will lead to an increased voltage of the galvanic cell at a given current load and in addition contribute to an increased loadability when the catalytic active biofilm is lacking.

Secondly, the catalysts are chemically and electrochemically stable in the environment and under the conditions which are experienced during the operation of the galvanic cell.

Thirdly, the catalysts are mechanically stable and are well attached to the substrate, in such a manner that they are not susceptible to shedding, blistering or other modes of detachment between the catalyst layer and the substrate during normal operation or handling of the cell.

Furthermore, the catalysts do not contain any precious metals, nor do they involve costly production processes, which significantly contributes to an increase in total cathode cost.

Furthermore, the catalysts do not contain toxic material, or produce such material, which may reduce the ability of the cathode to form the above described catalytic active biofilm on the cathode surface. This means that the catalysts which are the basis of this invention, do not lead to any degradation of performance during operation after the initial period.

The introduction of these catalysts makes the operation of the galvanic cell in principle independent on the formation of catalytic active biofilm, although a slight decrease in performance is observed if the biofilm is removed from the surface or if the cell is operated in artificial sea water.

The preferred substrate, on which the catalysts are applied, must have a very high degree of corrosion resistance, since the electrochemical potentials experienced by the cathode are very high. Corrosion of the substrate would lead to lower cell voltage due to higher local cathode current density, since the total cathode current density is the sum of current density due to external load and the corrosion current density. One type of stainless steel alloy that has shown sufficient corrosion resistance to be suitable as a substrate for the present catalysts contain approximately 17% Cr, 12% Ni and 2.5% Mo, and are commonly denoted AISI 316 (TM). Other molybdenum containing stainless steel alloys will also be suitable for this purpose.

The preferred substrate may be present in either filamentary form, such as stainless steel wool, or in sheets or plates in various forms or shapes.

One of the preferred catalysts contain cobalt in the form of cobalt spinel or cobalt oxide as the active ingredient of the catalyst. The catalyst is made by applying a solution of cobalt nitrate diluted in alcohol, for instance in isopropyl alcohol, to the stainless steel substrate, and with a subsequent heat treatment of between 270 and 600 °C in oxidizing atmosphere for a time length of 15 minutes to 24 hours.

Alternatively a mixture of cobalt nitrate and nickel nitrate may be used instead of cobalt nitrate alone. The mixture is diluted in alcohol and heat treated as specified above. The molar ratio between nickel nitrate and cobalt nitrate should not exceed 1:1 if the good catalytic activity shall be maintained.

Also other types of metallic elements other than nickel may partly substitute cobalt to form a spinel structure that is more catalytic active to reduce oxygen dissolved in salt water than the bare stainless steel surface. Examples of such elements that in combination with cobalt may create spinel structures, are iron and aluminium. Also other elements than those mentioned above may to a certain extent be added to the cobalt spinel structure and still maintain the preferable properties of this invention.

Another preferred catalyst contain materials normally denoted as active carbon as the active catalyzing agent. This catalyst is made by mixing the active carbon with a binder which contain a volatile solvent or a two-component chemical binder, for instance what is commonly referred to as epoxy (TM). After mixing, the mixture is applied to the substrate and is allowed to rest at room temperature or at slightly elevated temperatures, until the mixture is solidified.

One preferred type of binder contains polyvinyl chloride (PVC) diluted in organic solvents. One binder of this type is manufactured under the name Tangit (TM) by Henkel A.G.

The weight ratio between the amount of dry active carbon and PVC in the binder must be such that the catalyst has a good ability to reduce dissolved oxygen in salt water, and at the same time has a good mechanical attachment to the substrate and is sufficiently mechanically stable to be used on a long term basis in a galvanic cell. The span of ratios that fulfill all of these requirements lay between 1:4 and 1:2.

Both these catalysts fulfill the requirements and objectives stated above for use in the galvanic cell specified.

In order to further clarify the invention and the improvements that follow from the invention as compared to prior art devices, reference will be made to the following figures.

Figure 1 illustrates an example of use of a galvanic cell, containing a stainless steel cathode without the use of any premade catalyst, together with a magnesium anode and using a natural sea water electrolyte. The figure shows the cell voltage versus time at a constant current output,

Figure 2 shows the results from two similar experiments as in Figure 1, but using cathodes with a cobalt containing catalyst applied to the surface of the stainless steel cathode substrate,

Figure 3 shows the results from a similar experiment as in Figures 1 and 2, but with a catalyst containing active carbon applied to the stainless steel substrate, and

Figures 4 to 9 illustrate three possible cell designs, using the cathode catalysts which are the basis of this invention.

To further illustrate the invention, references are made to the following examples:

Example 1:

A galvanic cell, consisting of a cylindrical magnesium anode and a stainless steel cathode, which consisted of eight parallelly arranged square plates, each with a circular hole in the center of the plates to give space to the central anode. The plates had an individual spacing of 15 mm, and each plate was 0.5 m times 0.5 m and 1 mm in thickness. The central hole had a diameter of 0.2 m. The cathode plates were mechanically secured by using four parallel stainless steel rods, which were welded to each corner of the plates and extending through all of the plates. At the end of these rods two end plates of an electrical insulating material were placed in order to secure the anode. The anode had a diameter of 0.14 m and a length of approximately 0.2 m. Proper electrical connections to the metal anode and the cathode were made.

The anode material consisted of approximately 6% aluminium and 3% zinc as the main constituents, apart from magnesium.

The cathode consisted of a stainless steel alloy of type 254 SMO (TM) and was manufactured by the Swedish company Avesta AB This alloy contains approximately 20 % Cr, 18 % Ni and 6% Mo as its main constituents, apart from Fe. No further pretreatment was done to the stainless steel cathodes in this experiment.

The described galvanic cell was submerged in natural sea water in such a manner that the parallelly arranged cathode plates were orientated vertically and axis of the cylindrical anode orientated horizontally in the water. The sea water had a temperature in the range of 8-12 °C and the flow rate was in the order of 1 cm per second. The cell was put on a constant current load of 50 mA per $m^2$ cathode area and the corresponding cell voltage was periodically registered.

Figure 1 shows the cell voltage during the first 90 days of operation. As will be seen from the figure, during the first 20 days the cell voltage is low, i e approximately 0.7 V at the specific load of 50 mA/$m^2$. After 20 days the cell voltage increases to a plateau of approximately 1.4 V and 20 days later a new plateau is reached at approximately 1.7 V. The increase in cell voltage which is observed after 20 days is due to the active biological film which is formed on the surface of the cathode, as discussed above in this description. The reason for this two-step increase in cell voltage is not known.

During the first 20 days this cell is delivering less than half the amount of power compared to the power output after 40 days of operation at the specified cathode current density. In addition the loadability in this period is substantially lower as compared to after the initial period.

Example 2:

A galvanic cell of similar construction as in Example 1 was made, but differing from that cell by letting the cathode plates go through a pretreatment to increase the catalytic activity with respect to reduction of oxygen dissolved in the sea water during the initial period of cell operation.

The pretreatment consisted of applying a thin layer of cobalt nitrate diluted in isopropyl alcohol after thoroughly cleaning of the cathode surface. The concentration of cobalt in this mixture was 0.2 moles per litre. After drying the cathode plates were placed in a furnace at a temperature of approximately 400 °C and kept there for one hour. The atmosphere in the furnace during the heat treatment was air.

The cell was placed under similar experimental conditions as in Example 1. Figure 2 shows the cell voltage during the first 40 days of operation at a specific cathode constant current load of 50 mA/$m^2$. As can be seen the cell voltage is initially approximately 1.5 V, as compared to 0.7 V for the prior art device shown in Example 1. After one week of operation the cell voltage increased from 1.5 V to 1.77 V. The cell voltage remained at this high cell voltage for a period of seven month when the experiment was terminated.

The increase in cell voltage after the first week of operation shows that the catalyst which is the basis of this invention do not inhibit the formation of the active biofilm on the cathode surface. In fact the duration of the initial period seems to have been shortened by introduction of the applied catalyst.

Also the loadability during the initial period is greatly increased by the introduction of the cobalt spinel type of catalyst. Furthermore, if the above described biofilm should be destroyed, only a slight decrease in performance would be observed, corresponding to a cell voltage reduction from approximately 1.7 V to 1.5 V.

Furthermore, the power output from the galvanic cell in the initial period is increased by a factor of approximately two by introducing the cobalt spinel catalyst.

Example 3:

Another experiment was performed by using a galvanic cell of identical construction and cathode pretreatment as in Example 2. Except for a specific cathode current load of 100 mA/$m^2$ the experimental conditions were identical as in the example mentioned above.

As can be seen in Figure 2 the cell voltage shows a similar behaviour as in the previous experiment. As can be expected the cell voltage is somewhat lower throughout this experiment because of the higher current load. However even at this high cathode current load of 100 mA/$m^2$ the cell voltage is approximately 1.45 V during the initial period, which is between two and three times higher than what should be expected from a comparable prior art device. This illustrates the increase in performance, both in terms of cell voltage, loadability, power output and reliability during the initial period, which is a direct result of the present invention.

Example 4:

Three stainless steel plates of type 254 SMO (TM) were tested in water containing 0.5 molar sodium chloride. The first plate was catalyzed according to the pretreatment specified in Examples 2 and 3. The second plate was catalyzed by applying a thin layer of a mixture of cobalt nitrate and nickel nitrate diluted in isopropyl alcohol, and with a subsequent heat treatment at 400 °C for one hour. The molar ratio between the cobalt nitrate and the nickel nitrate was 2:1. The third plate was an uncatalyzed plate.

The plates were tested in an electrochemical cell with a magnesium counter electrode. The electrolyte was circulated through the cell using a peristaltic pump. The electrolyte temperature was approximately 20 °C. The exposed area of the cathode plates were 3.5 $cm^2$. The plates were tested potentiostatically. The corresponding cell currents were registered.

Table 1 shows the cell voltage and the corresponding cell currents of the three different electrochemical cells. The measurement was made 20 hours after exposure to the electrolyte. The cell with the cobalt spinel cathode catalyst is denoted Cell#1, the cell with the cobalt-nickel spinel cathode catalyst is denoted Cell#2, and the cell with no catalyst is called Cell#3.

| Cell voltage (V) | Cell#1 Cell current (mA) | Cell#2 Cell current (mA) | Cell#3 Cell current (mA) |
|---|---|---|---|
| 1.25 | 5.2 | 14.0 | 0 |

Table 1: The performance of three galvanic cells using cobalt spinel, cobalt-nickel spinel and no catalyst, respectively.

As can be seen from Table 1 the cell current after 20 hours of exposure to the salt water shows higher values for both the cells with catalyzed cathodes, as compared to the cell with no catalyst.

Example 5:

In this example a sea water galvanic cell of identical cell construction as in Example 2 and 3, but with a cathode catalyst containing active carbon as the active component, was used.

The catalyst in this experiment was made by applying a thin layer of a mixture of active carbon and a polyvinyl chloride binder on a thoroughly cleaned stainless steel substrate. The mixture consisted of one part (by weight) active carbon of type Norit SX Ultra (TM), manufactured by Norit Activated Carbons, Holland and two parts of a polyvinyl chloride binder of type Tangit (TM) To this mixture methylene dichloride was added to give the mixture a viscosity suitable for application of the mixture on to the stainless steel substrate. In this experiment this amounted to ten parts of methylene dichloride (by weight) for each part of the carbon-polyvinyl chloride mixture.

After the application of the catalyst material on to the substrate, the material was allowed to solidify by evaporation of the volatile ingredients at a temperature of 60°C.

The cell was submerged in natural sea water and exposed to the same experimental conditions as in Example 3, i. e. 100 $mA/m^2$ specific cathode current load.

Figure 3 shows the cell voltage as a function of operation time of the galvanic cell, analogue to what was shown in Figure 2. This galvanic cell shows similar behaviour as in the two previous examples with a premade catalyst layer on the cathode surface. However, a slightly lower performance as compared to the cobalt spinel catalyst, is observed, although this may be due to a less optimised pretreatment for the active carbon catalyst.

In Figures 4 and 5 are schematically illustrated one embodiment of the invention. Figure 5 shows a cut through lines V-V in Figure 4, whereas Figure 4 shows a cut through lines IV-IV in Figure 5. A cathode 1 consisting of stainless steel wool with a catalyst as specified above, is confined between two stainless steel grids 2 and 3 and a coaxially arranged anode 4 is supported within the cathode 1 by insulation means 5 and 6. The cell output is taken from a cable 7 which via connector units 8 and 9 are connected to the cathode 1 and anode 4. At 10 and 11 are indicated suspension means by which the cell may be installed vertically in the sea water.

The use of the invention is not limited to one specific cell design, for instance the use of catalyzed stainless steel wool as cathode material, as exemplified above. There is a large range of possible ways of assembling a sea water cell, by using the catalyzed cathode material which is the basis of this invention, to give the improvements compared to prior art devices, as stated above.

To illustrate this, one alternative cell arrangement is schematically illustrated in Figures 6 and 7. Figure 7 shows a cut through lines VII-VII in Figure 6, whereas Figure 6 shows partly a cut through lines VI-VI in Figure 7. Here, the cell consists of a central cylindrical metal anode 12 which may be a magnesium alloy, an aluminium alloy, a zinc alloy or a lithium alloy, i. e. any metal in the galvanic series that is negative in respect to the stainless steel.

The cathode 13 in Figures 6 and 7 consists of numerous parallelly arranged plates 14 of a stainless steel material and with a catalytic active layer with the characteristics stated above. In the center of each plate, which may have a rectangular or circular shape, there is an aperture 15 giving space for the metal anode 12. Each plate is attached to two or more rods 16, preferably in the same material as the cathode plates 14, in such a manner that good electrical contacts are provided between the plates 14 and the rods 16. Electrical connection of the cathode is provided by contact means 17. At the ends of the anode/cathode assembly, there are two end plates 18 and 19, made from a material that is electrically insulating, and that will enable mechanical security of the anode/cathode assembly. In one end of the anode, provisions 20 are made to allow current collection from the anode 12. Mounting means 21 and 22 are indicated.

In Figures 8 and 9 are illustrated an alternative way of making a salt water cell having a plate cathode 29. Figure 8 shows a cut through lines VIII-VIII in Figure 9, whereas Figure 9 shows a cut through the lines IX-IX in Figure 8 (the rod 35 is however omitted in Figure 9). A number of catalyzed stainless steel plates or sheets 30 are mounted in a radial fashion relatively to a rod like anode 31. The cathode plates 30 are mounted between two end plates 32 and 33 and the components are assembled by rods 34 and 35. Supporting arrangements and electrical connections are not shown.

It must be emphasized that the above mentioned designs of the salt water cell should only be taken as examples of three possible arrangement of the constituents of the cell, and is merely a way of illustrating the invention at hand, rather than specifying the limitation of the invention. While stainless steel wool or plates is considered the preferred catalyst substrate material for the cathode and magnesium alloys the preferred anode material, other combinations of metals may be used to improve the performance of the galvanic cell as compared to prior art devices. It is therefore understood that certain modifications, alternations and substitutions may be made without departing from the scope of the present invention. The cathode plates can for instance be perforated metal plates.

## Claims

1. Salt water cell having a metal anode (4,12,31) preferably of a magnesium alloy and a cathode (1,13,29) of a stainless steel substrate, **characterized in that** the steel substrate is coated with a catalyst layer containing a cobalt oxide or cobalt spinel, for reduction of oxygen in the electrolyte.

2. Cell according to claim 1, **characterized in this that** the catalyst is applied by coating the cathode substrate with a solution containing cobalt nitrate followed by heat treatment of the cathode substrate at a temperature of between 270 and 600 $^{o}C$.

3. Cell according to claim 1, **characterized in that** the catalyst is a cobalt nickel spinel.

4. Cell according to claim 3, **characterized in this that** the molar ratio between cobalt nitrate and nickel nitrate contained in the cobalt nickel spinel is more than 1.

5. Cell according to claim 3 or 4, **characterized in this that** the catalyst is applied by coating the cathode substrate with a solution containing a mixture of cobalt nitrate and nickel nitrate followed by heat treatment of the cathode substrate at a temperature of between 270 and 600 $^{o}C$.

6. Cell according to any one of the preceding claims, **characterized in that** the cathode consists of filamentary catalyzed material such as catalyzed stainless steel wool (1) coaxially arranged around a rod like anode (4).

7. Cell according to any one of the preceeding claims, **characterized in that** the cathode consists of a number of parallelly arranged catalyzed stainless steel plates (13) or sheets.

8. Cell according to any one of the preceding claims, **characterized in that** the cathode consists of a number of catalyzed stainless steel plates (29) extending radially relatively to a rodlike anode.

9. Cell according to any one of the preceding claims, **characterized in this that** the cathode consists of filamentary catalyzed material such as catalyzed stainless steel wool coaxially arranged around a rod like anode.

10. Cell according to any one of the preceeding claims, **characterized in this that** the cathode consists of a number of parallelly arranged catalyzed stainless steel plates or sheets.

11. Cell according to any one of the preceding claims, **characterized in this that** the cathode consists of a number of catalyzed stainless steel plates extending radially relatively to a rodlike anode.

**Patentansprüche**

1. Salzwasserzelle mit einer Metallanode (4, 12, 31), bevorzugt aus einer Magnesiumlegierung, und einer Kathode (1, 13, 29) aus einem Substrat aus rostfreiem Stahl, dadurch gekennzeichnet, daß das Stahlsubstrat beschichtet ist mit einer ein Kobaltoxid oder einen Kobaltspinell enthaltenden Katalysatorschicht zur Reduktion von Sauerstoff in dem Elektrolyten.

2. Zelle nach Anspruch 1, dadurch gekennzeichnet, daß der Katalysator aufgebracht wird durch Beschichten des Kathodensubstrats mit einer Kobaltnitrat enthaltenden Lösung, gefolgt von Wärmebehandlung des Kathodensubstrats bei einer Temperatur von zwischen 270 und 600° Celsius.

3. Zelle nach Anspruch 1, dadurch gekennzeichnet, daß der Katalysator ein Kobalt-Nickel-Spinell ist.

4. Zelle nach Anspruch 3, dadurch gekennzeichnet, daß das molare Verhältnis zwischen in dem Kobalt-Nickel-Spinell enthaltenen Kobaltnitrat und Nickelnitrat mehr als eins beträgt.

5. Zelle nach Anspruch 3 oder 4, dadurch gekennzeichnet, daß der Katalysator aufgebracht wird durch Beschichten des Kathodensubstrats mit einer eine Mischung aus Kobaltnitrat und Nickelnitrat enthaltenden Lösung, gefolgt von Wärmebehandlung des Kathodensubstrats bei einer Temperatur von zwischen 270 und 600° Celsius.

6. Zelle nach irgendeinem der vorangehenden Ansprüche, dadurch gekennzeichnet, daß die Kathode besteht aus einem faserartigen, mit Katalysator versehenen Material wie mit Katalysator versehener rostfreier Stahlwolle (1), das koaxial um eine stabähnliche Anode (4) herum angeordnet ist.

7. Zelle nach irgendeinem der vorangehenden Ansprüche, dadurch gekennzeichnet, daß die Kathode besteht aus einer Anzahl parallel angeordneter, mit Katalysator versehener Platten (13) oder Flachmaterialstücke aus rostfreiem Stahl.

8. Zelle nach irgendeinem der vorangehenden Ansprüche, dadurch gekennzeichnet, daß die Kathode besteht aus einer Anzahl mit Katalysator versehener Platten (29) aus rostfreiem Stahl, die sich relativ zu einer stabähnlichen Anode radial erstrecken.

9. Zelle nach irgendeinem der vorangehenden Ansprüche, dadurch gekennzeichnet, daß die Kathode besteht aus faserartigem, mit Katalysator versehenem Material, wie mit Katalysator versehener rostfreier Stahlwolle, das koaxial um eine stabähnliche Anode herum angeordnet ist.

10. Zelle nach irgendeinem der vorangehenden Ansprüche, dadurch gekennzeichnet, daß die Kathode besteht aus einer Anzahl parallel angeordneter, mit Katalysator versehener Platten oder Flachmaterialstücke aus rostfreiem Stahl.

**11.** Zelle nach irgendeinen, der vorangehenden Ansprüche, dadurch gekennzeichnet, daß die Kathode besteht aus einer Anzahl mit Katalysator versehener Platten aus rostfreiem Stahl, die sich relativ zu einer stabähnlichen Anode radial erstrecken.

## Revendications

**1.** Pile saline comprenant une anode métallique (4, 12, 31), de préférence en un alliage de magnésium, et une cathode (1, 13, 29) en acier inoxydable, caractérisée en ce que le substrat en acier est recouvert d'une couche catalytique contenant un oxyde de cobalt ou spinelle de cobalt pour la réduction de l'oxygène dans l'électrolyte.

**2.** Pile selon la revendication 1, caractérisée en ce que le catalyseur est appliqué en recouvrant le substrat cathodique avec une solution contenant du nitrate de cobalt puis en traitant par la chaleur le substrat cathodique à une température entre 270 et 600 ° C.

**3.** Pile selon la revendication 1, caractérisée en ce que le catalyseur est un spinel.

**4.** Pile selon la revendication 3, caractérisée en ce que le rapport molaire entre le nitrate de cobalt et le nitrate de cobalt contenu dans le spinel est supérieur à 1.

**5.** Pile selon la revendication 3 ou 4, caractérisée en ce que le catalyseur est appliqué en recouvrant le substrat cathodique avec une solution contenant un mélange de nitrate de cobalt et de nitrate de nickel, puis en traitant par la chaleur le substrat cathodique à une température entre 270 et 600 ° C.

**6.** Pile selon l'une quelconque des revendications précédentes, caractérisée en ce que la cathode est constituée de matériau filamentaux catalysé tel que de la laine d'acier inoxydable catalysé (1) enroulée de manière coaxiale autour d'une anode en forme de tige (4).

**7.** Pile selon l'une quelconque des revendications précédentes, caractérisée en ce que la cathode est constituée de plaques ou feuilles d'acier inoxydable catalysé parallèles entre elles (13).

**8.** Pile selon l'une quelconque des revendications précédentes, caractérisée en ce que la cathode est constituée de plaques d'acier inoxydable catalysé (29) s'étendant radialement par rapport à une anode en forme de tige.

**9.** Pile selon l'une quelconque des revendications précédentes, caractérisée en ce que la cathode est constituée de matériau filamenteux catalysé tel que de la laine d'acier inoxydable catalysé enroulée de manière coaxiale autour d'une anode en forme de tige.

**10.** Pile selon l'une quelconque des revendications précédentes, caractérisée en ce que la cathode est constituée de plaques ou feuilles d'acier inoxydable catalysé parallèles entre elles.

**11.** Pile selon l'une quelconque des revendications précédentes, caractérisée en ce que la cathode est constituée de plaques d'acier inoxydable catalysé s'étendant radialement par rapport à une anode en forme de tige.

Fig. 1

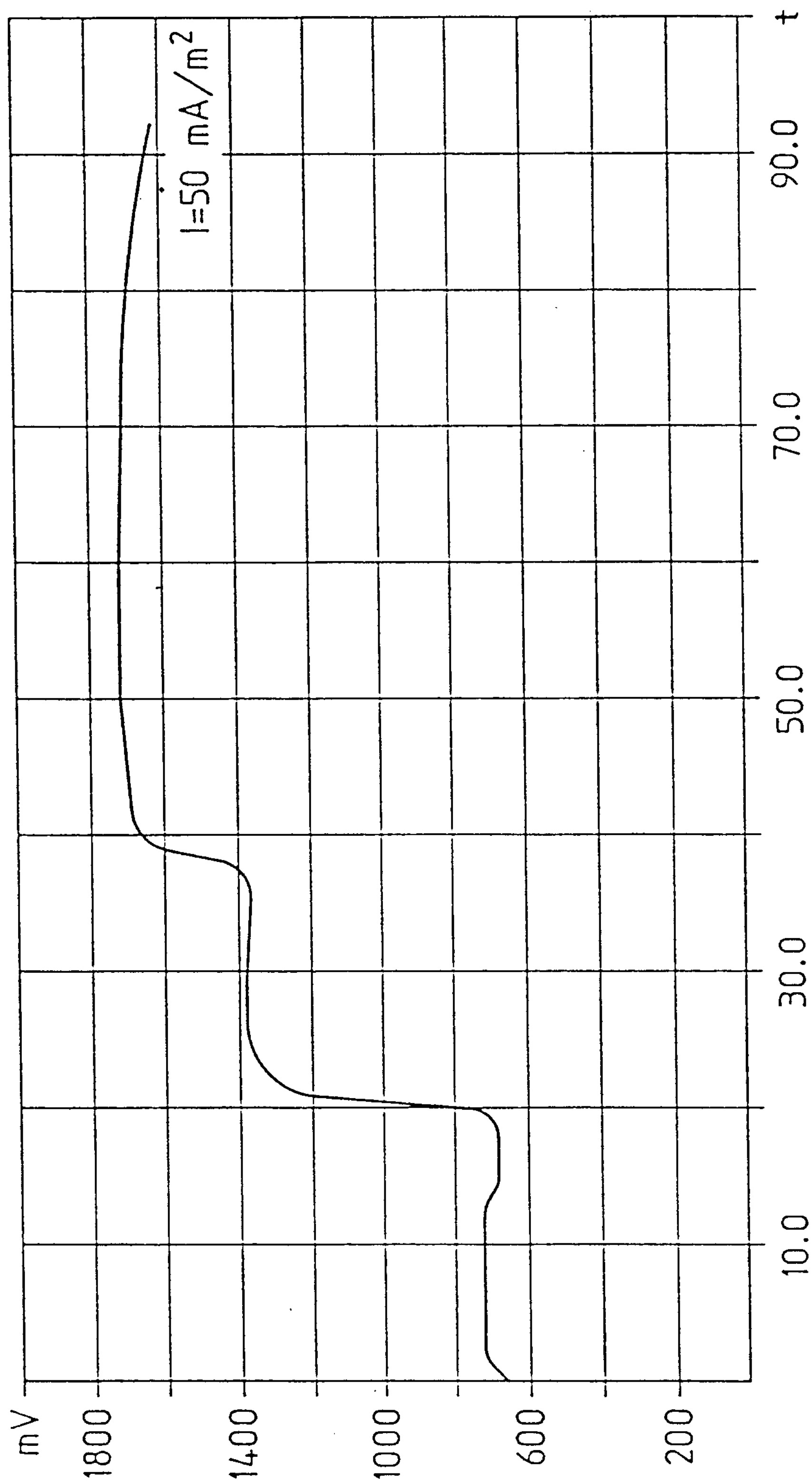

Fig. 2

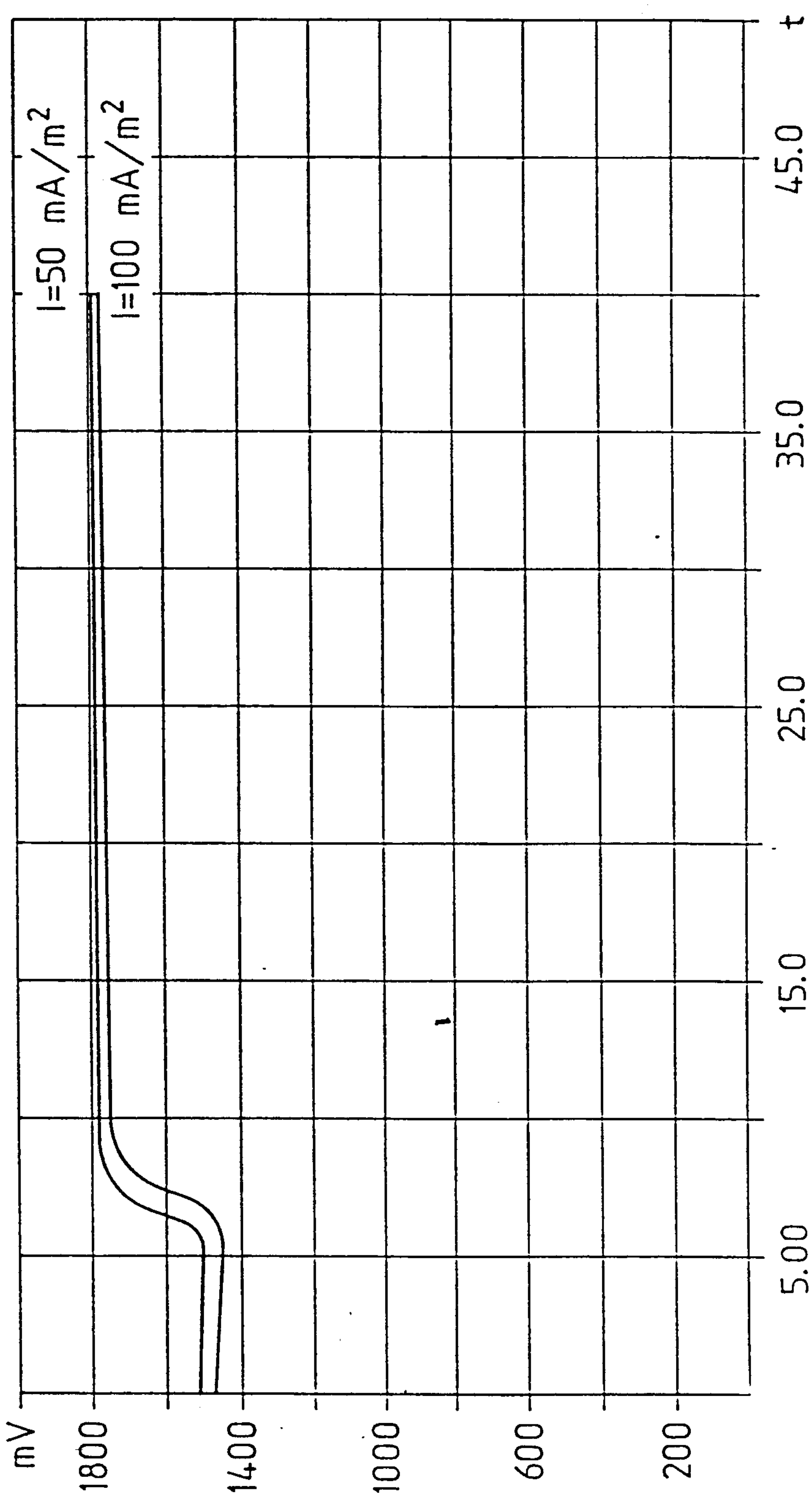

mV
1800
1400
1000
600
200
5.00
15.0
25.0
35.0
45.0
t
I=50 mA/m²
I=100 mA/m²

Fig. 3

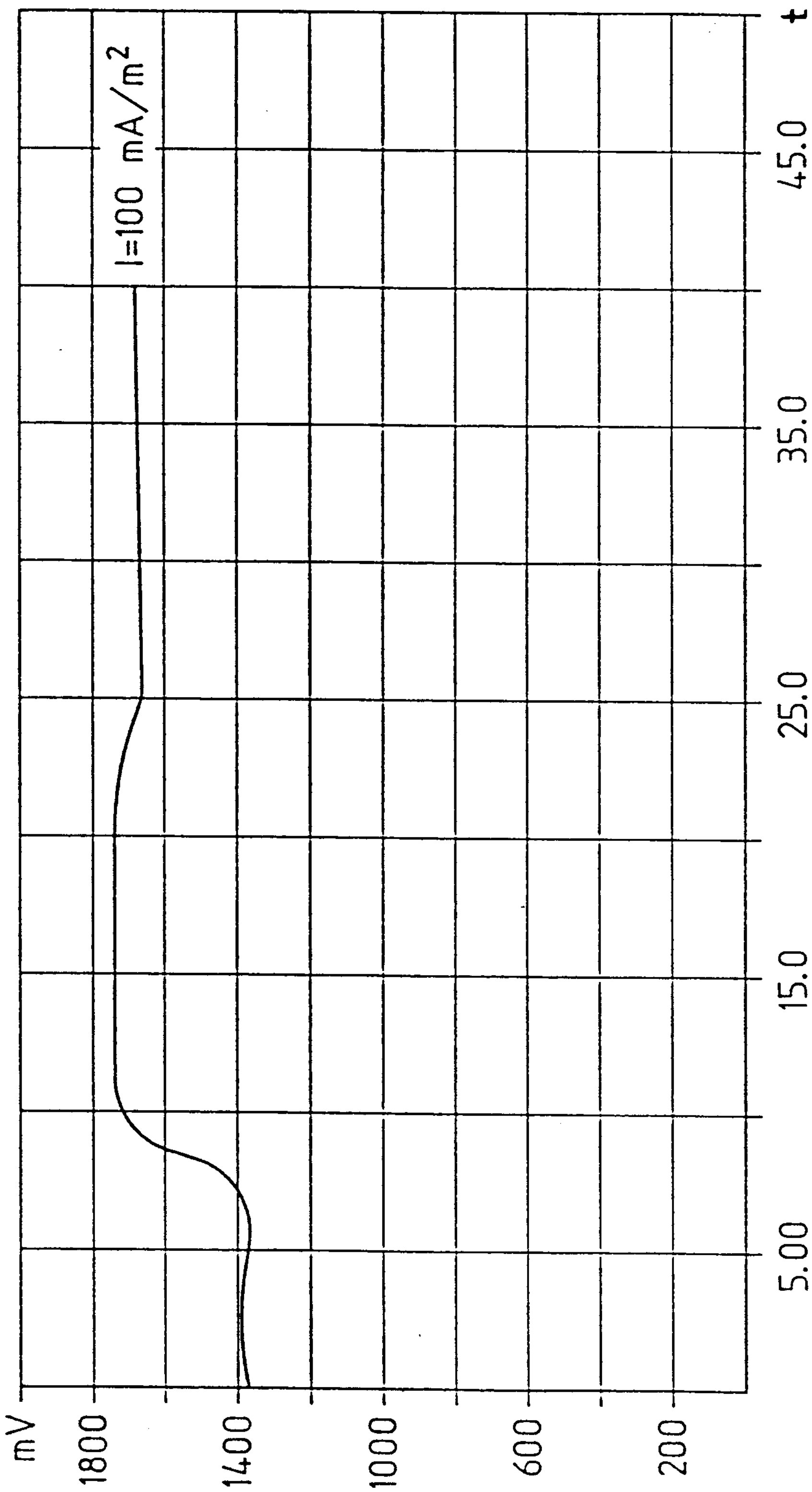

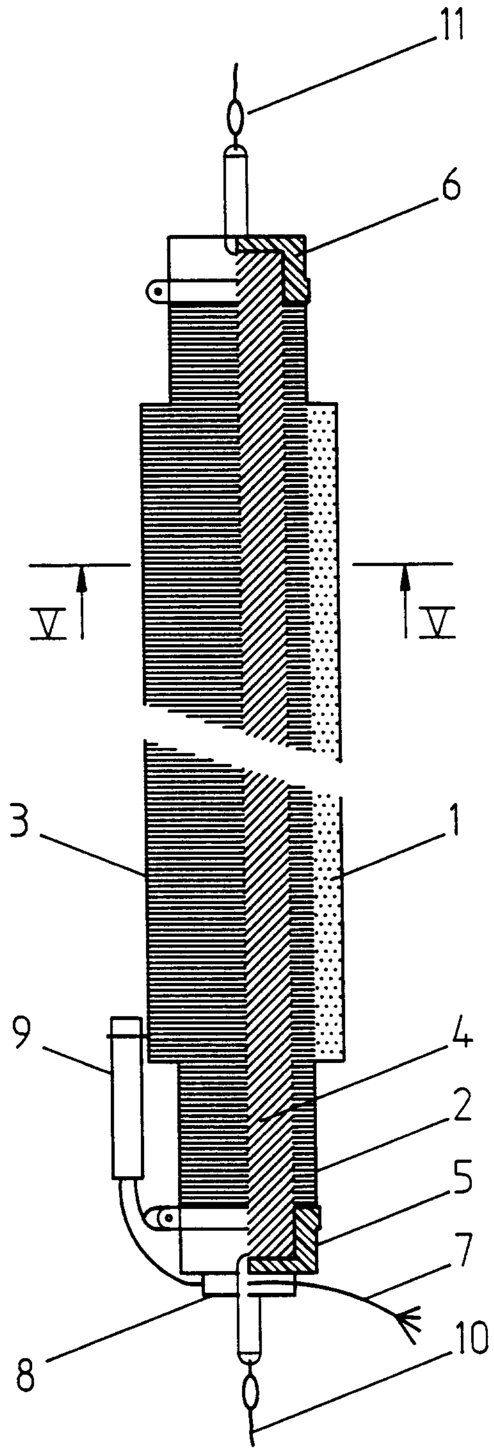


Fig. 4

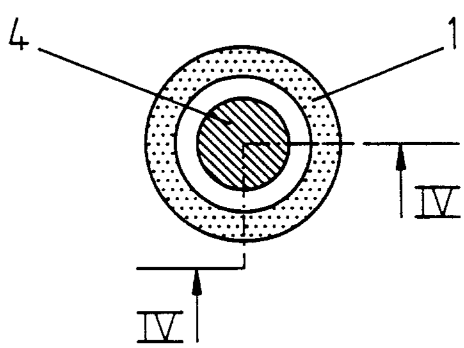


Fig. 5

Fig.6

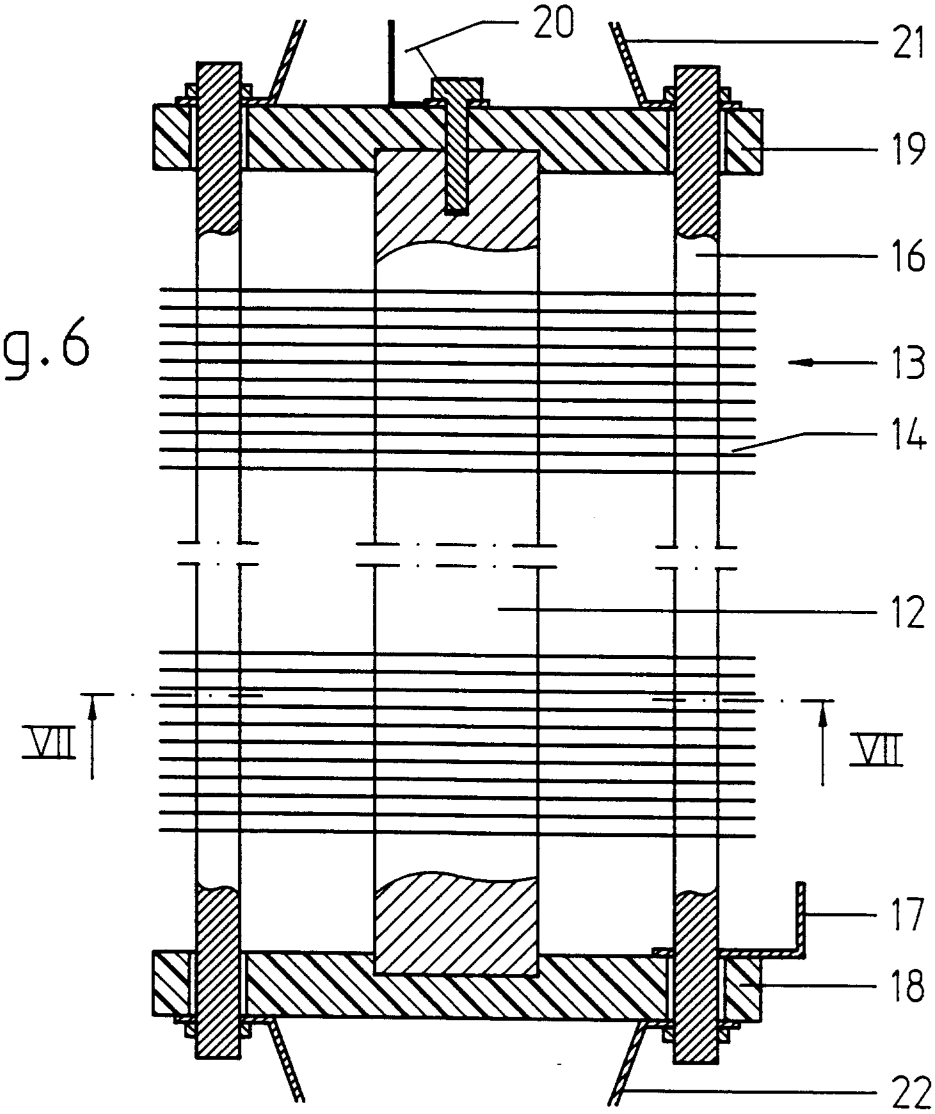


Fig.7

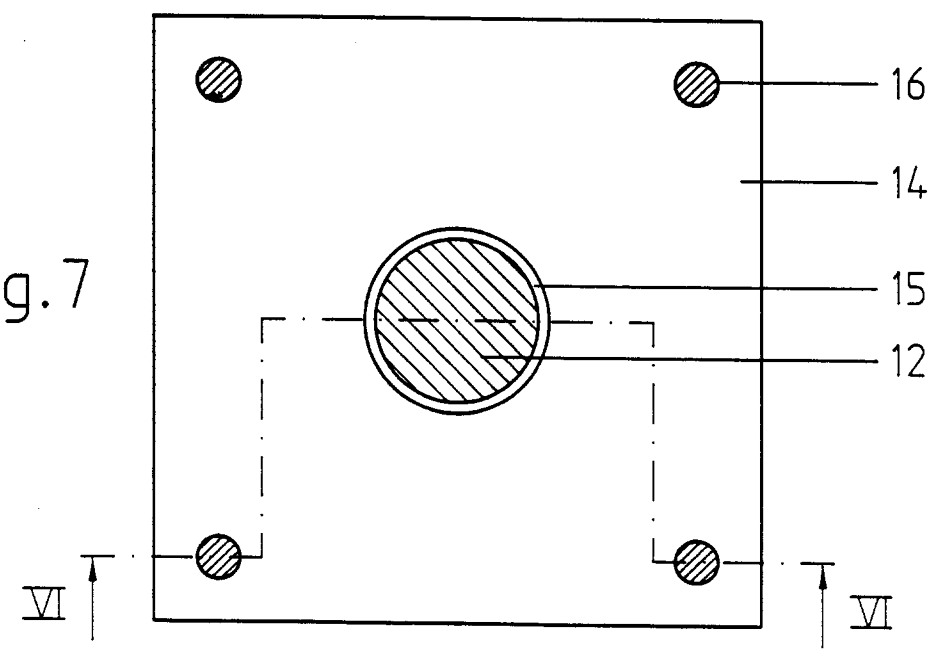

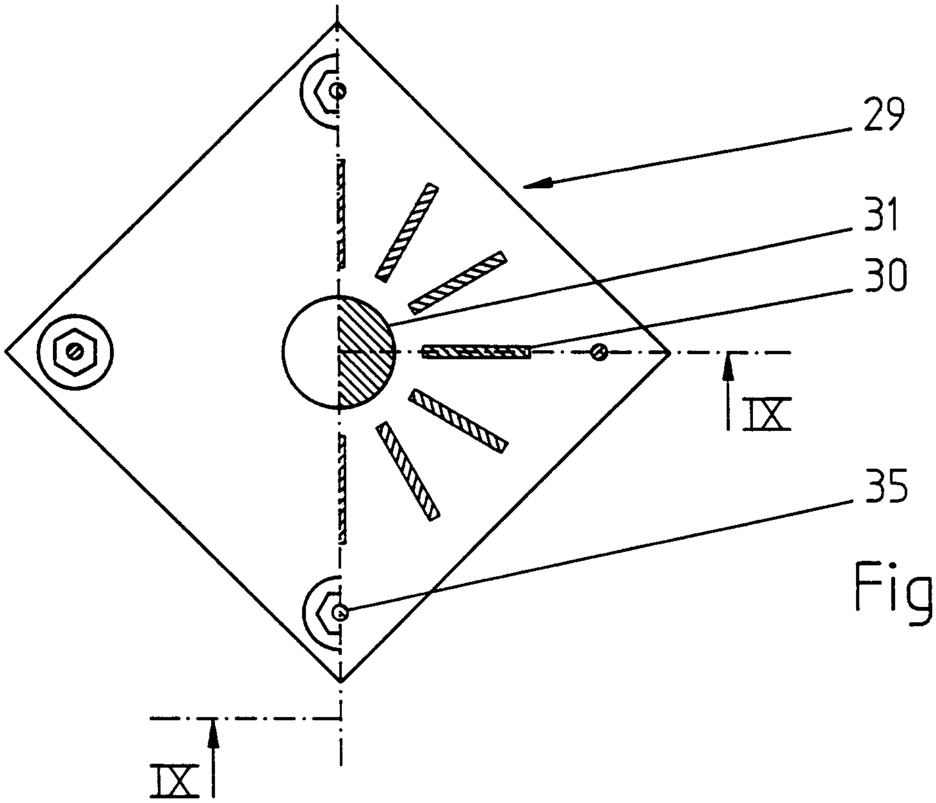


Fig. 8

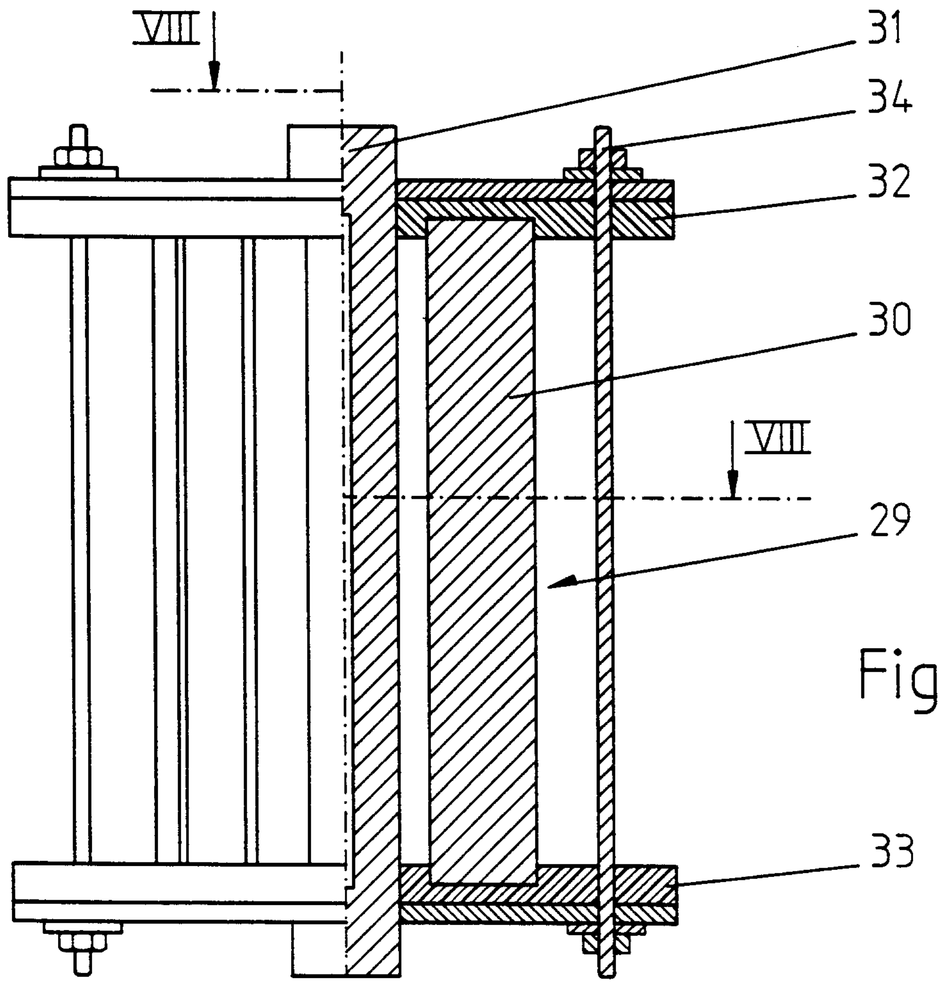


Fig. 9